# EUROPÄISCHE PATENTSCHRIFT

(11) **EP 3 133 335 B1**
(45) Veröffentlichungstag und Bekanntmachung des Hinweises auf die Patenterteilung: **16.05.2018**
(21) Anmeldenummer: 15174979.3
(22) Anmeldetag: 02.07.2015
(51) Int. Cl.: F21S 8/02, F21V 5/02, F21V 19/00, B64F 1/20, F21W 111/06, F21Y 115/10

(54) **UNTERFLURFEUER**
FLUSH LIGHT
FEU ENCASTRE

(43) Veröffentlichungstag der Anmeldung: 22.02.2017
(73) Patentinhaber: Induperm A/S, 4800 Nykøbing Falster (DK)
(72) Erfinder: Hildebrant, Alexander, 59557 Lippstadt (DE)
(74) Vertreter: Jöstingmeier, Martin

(56) Entgegenhaltungen:
- DE-A1- 4 008 932
- DE-U1- 20 309 405
- DE-U1-202009 009 583

## Beschreibung

Die Erfindung betrifft ein Unterflurfeuer mit wenigstens zwei in einer gemeinsame Hauptabstrahlrichtung orientiert angeordneten Lichtaustrittskanälen, mit einer Mehrzahl von den Lichtaustrittskanälen zugeordneten Leuchtmodulen umfassend wenigstens eine Lichtquelle und eine der Lichtquelle zugeordnete Primäroptik zum Formen des Lichts, wobei von dem Leuchtmodul emittiertes Licht über die zugeordneten Lichtaustrittskanäle abgestrahlt wird, mit einer Prismenoptik je Lichtaustrittskanal, welche von dem Licht des Leuchtmoduls durchschienen wird, und mit einem Gehäuse, welches bevorzugt mehrteilig realisiert ist und ausgebildet ist zur Aufnahme des Leuchtmoduls und der Prismenoptik.

Ein Unterflurfeuer ist beispielsweise aus der WO 2012/028562 A1 bekannt. Das Unterflurfeuer sieht ein Leuchtmodul mit einer Leuchtdiode als Lichtquelle vor. Der Leuchtdiode sind eine Primäroptik zum Formen des Lichts sowie eine nach Art eines Reflektors ausgebildete Sekundäroptik zugeordnet. Der Reflektor lenkt das Licht der Leuchtdiode um etwa 90° um in eine Hauptabstrahlrichtung des Unterflurfeuers, welche horizontal erstreckt oder um einen kleinen Winkel zur Horizontalen geneigt orientiert ist.

Aus der DE 20 2009 009 583 U1 ist ein Unterflurfeuer bekannt, welches eine Mehrzahl von Lichtaustrittskanälen und eine Mehrzahl von den Lichtaustrittskanälen zugeordneten Leuchtmodulen aufweist. Die Leuchtmodule sind hierbei an einem gemeinsamen Lichtquellenträger festgelegt. Im Rahmen der Montage werden die Module zunächst an dem Lichtquellenträger montiert und dann der Lichtquellenträger mit den Leuchtmodulen in einem Gehäuse des Unterflurfeuers fixiert. Jedem Leuchtmodul ist darüber hinaus eine Prismenoptik als Sekundäroptik zugeordnet. Die Prismenoptiken werden über eine gemeinsame Prismendruckplatte in dem Gehäuse des Unterflurfeuers gehalten. Wesentliches Merkmal des Unterflurfeuers ist insofern die einheitliche Befestigung der Prismenoptiken einerseits und der an dem gemeinsamen Leuchtmittelträger festgelegten Leuchtmodule andererseits in dem Gehäuse des Unterflurfeuers. Die Montage ist insofern mehrstufig und der Austausch eines Leuchtmodules oder einer Prismenoptik vergleichsweise aufwendig.

DE 40 08 932 A1 offenbart ein Unterflurfeuer mit einem Gehäuse, das zwei in eine gemeinsame Hauptabstrahlrichtung orientiert angeordnete Lichtaustrittskanäle hat, denen je ein Leuchtmodul zugeordnet ist. Jedes Leuchtmodul hat eine Lichtquelle und eine der Lichtquelle zugeordnete Primäroptik zum Formen des Lichts. Zudem hat das Unterflurfeuer je Lichtaustrittskanal eine Prismenoptik, die von dem Licht der Leuchtmodule durchschienen wird. Für jedes Leuchtmodul ist ein separater Lichtquellenträger vorgesehen. Dabei ist der Lichtquellenträger als Teil des Leuchtmoduls ausgeführt ausgebildet und flächig an einer Stützfläche angelegt.

DE 20 2009 009 583 U1 beschreibt ein Unterflurfeuer mit drei in eine gemeinsame Hauptabstrahlrichtung orientiert angeordneten Lichtaustrittskanälen. Das Unterflurfeuer weist ein den Lichtaustrittskanälen zugeordnetes Leuchtmodul mit drei Lichtquellen und drei jeweils einer Lichtquelle zugeordnete Primäroptiken auf. Über Prismenoptiken wird das Licht in die Lichtaustrittskanäle abgestrahlt. Ein mehrteiliges Gehäuse nimmt das Leuchtmodul und die Prismenoptik auf.

DE 203 09 405 U1 offenbart ein Unterflurfeuer mit einem in eine Hauptabstrahlrichtung orientiert angeordneten Lichtaustrittskanal. Das Unterflurfeuer weist ein dem Lichtaustrittskanal zugeordnetes Leuchtmodul mit drei Lichtquellen auf. Jeder der Lichtquellen ist jeweils eine Primäroptik zum Formen des Lichts zugeordnet, welches über den zugeordneten Lichtaustrittskanal abgestrahlt wird.

Aufgabe der vorliegenden Erfindung ist es, ein gattungsgemäßes Unterflurfeuer konstruktiv zu vereinfachen und insbesondere in Richtung einer verbesserten Montage- und Wartungsfreundlichkeit weiterzuentwickeln.

Für jedes Leuchtmodul ist ein separater Lichtquellenträger vorgesehen. Der Lichtquellenträger ist als Teil des Leuchtmoduls ausgeführt.

Die Lösung der Aufgabe ist im Anspruch 1 angegeben. Vorteilhafte Ausgestaltungen der Erfindungen sind Gegenstand der abhängigen Patentansprüche.

Der besondere Vorteil der Erfindung besteht darin, dass die Leuchtmodule einzeln montiert beziehungsweise demontiert werden können, wenn auf einem gemeinsamen Lichtquellenträger für eine Mehrzahl von Leuchtmodulen verzichtet wird. Die Leuchtmodule werden insofern einzeln in das Gehäuse des Unterflurfeuers eingesetzt beziehungsweise zu Wartungszwecken oder beim Austausch aus dem Gehäuse entnommen. Eine mehrstufige Montage entfällt. Ebenso kann die Orientierung der Leuchtmodule in dem Gehäuse variieren und individuell eingestellt beziehungsweise gewählt werden. Beispielsweise können zwei Leuchtmodule zueinander winkelversetzt in dem Gehäuse des Unterflurfeuers vorgesehen werden. Hierdurch vereinfachen sich die Adaption der Lichtverteilung des Unterflurfeuers und die Bereitstellung von Varianten, welche sich beispielsweise durch die Orientierung der Lichtaustrittskanäle unterscheiden.

Im Sinne der Erfindung sind die wenigstens zwei Lichtaustrittskanäle in die gemeinsame Hauptabstrahlrichtung des Unterflurfeuers orientiert, wenn eine Kanallängsrichtung in die Hauptabstrahlrichtung vorgesehen ist oder zwischen der Kanallängsrichtung und der Hauptabstrahlrichtung ein Winkel von maximal +/- 30° gebildet ist. Beispielsweise können drei Lichtaustrittskanäle einer gemeinsamen Hauptabstrahlrichtung zugeordnet sein. Es ist hierbei ein mittlerer Lichtaustrittskanal unmittelbar in die Hauptabstrahlrichtung erstreckt, während zwei benachbarte Lichtaustrittskanäle unter einem vorzugweise betragsmäßig gleichen Winkel geneigt zur Hauptabstrahlrichtung vorgesehen sind. Es wird hierdurch eine gleichermaßen fokussierte und den geltenden Richtlinien entsprechende Lichtverteilung bereitgestellt. Beispielsweise kann ein Unterflurfeuer hergestellt werden mit zwei bevorzugt entgegengesetzt orientieren Hauptabstrahlrichtungen, wobei wenigstens einer der zwei Hauptabstrahlrichtungen des erfindungsgemäßen Unterflurfeuers wenigstens zwei Lichtaustrittskanäle und eine Mehrzahl von den Lichtaustrittskanälen zugeordneten Leuchtmodulen zugeordnet sind.

Als Lichtquellen weisen die Leuchtmodule bevorzugt Leuchtdioden auf. Je Leuchtmodul kann hierbei eine einzelne Leuchtdiode oder eine Mehrzahl von Leuchtdioden vorgesehen sein. Es kann erfindungsgemäß eine Primäroptik je Lichtquelle zur Anwendung kommen.

Der Lichtquellenträger ist flächig an einer an dem Gehäuse ausgebildeten Stützfläche angelegt. Vorteilhaft wird durch die flächige Anlage des Lichtquellenträgers an der Stützfläche ein guter Wärmeübergang von dem Leuchtmodul zu dem Gehäuse realisiert. Auf das Vorsehen separater Kühlkörper kann insofern gegebenenfalls verzichtet werden. Das Gehäuse selbst übernimmt hier die Funktion des Kühlkörpers. Zugleich kann die flächige Anlage des Lichtquellenträgers an der Stützfläche der Positionierung des Leuchtmoduls in dem Gehäuse dienen. Einer Fehlmontage und insbesondere einem Verkanten oder Verkippen des Leuchtmoduls bei der Montage ist insofern entgegengewirkt.

Die an dem Gehäuse gebildete Stützfläche beziehungsweise der Lichtquellenträger sind in ihrer flächigen Erstreckung senkrecht zu der Kanallängsrichtung des zugeordneten Lichtaustrittskanals orientiert. Insbesondere kann eine optische Hauptachse der als Lichtquelle verwendeten Leuchtdiode in die Kanallängsrichtung orientiert vorgesehen sein. Vorteilhaft ergibt sich durch die erfindungsgemäße Anordnung beziehungsweise Orientierung der Stützfläche und des Lichtquellenträgers und die Erstreckung der optischen Hauptachse der Leuchtdiode in die Kanallängsrichtung ein sehr kompakter Aufbau des Unterflurfeuers. Das Licht der teilung. Neben der äußerst kompakten Bauform reduzieren sich durch den Verzicht auf den Reflektor die Kosten für das Unterflurfeuer und der Montageaufwand.

Nach einer Weiterbildung der Erfindung ist das Gehäuse des Unterflurfeuers mehrteilig ausgebildet. Die Lichtaustrittskanäle sind dabei ebenso an einem Gehäuseoberteil ausgebildet wie die der Aufnahme der Leuchtmodule dienenden Stützflächen. Vorteilhaft wird durch das Vorsehen der Lichtaustrittskanäle und der Stützflächen an dem gleichen Gehäuseteil ein insgesamt modularer Aufbau für das Unterflurfeuer realisiert werden. Insbesondere können Varianten mit unterschiedlich angeordneten Lichtaustrittskanälen aufgebaut werden, indem das Gehäuseoberteil ausgetauscht und ansonsten gleiche Gehäuse- und Funktionskomponenten verwendet werden. In das applikationsspezifisch gestaltete Gehäuseoberteil werden dann stets gleiche Leuchtmodule beziehungsweise Prismenoptiken eingesetzt. Eine Modifikation des Leuchtmoduls oder das Vorsehen von Adapterbauteilen zur Variation der Orientierung des Leuchtmoduls in dem Gehäuse sind nicht erforderlich und einer Fehlmontage ist zuverlässig vorgebeugt.

Nach einer Weiterbildung der Erfindung ist jeder Prismenoptik ein einzelnes Fixiermodul vorgesehen, welches an dem die Prismenoptik aufnehmenden Gehäuse festgelegt wird zum Fixieren und Positionieren der Prismenoptik. Vorteilhaft kann durch das Vorsehen eines einzelnen Fixiermoduls je Prismenoptik die Montage des Unterflurfeuers vereinfacht werden. Zudem können die Prismenoptiken einzeln demontiert beziehungsweise ausgetauscht werden. Es ergibt sich insofern eine Reduzierung des Wartungsaufwands und einer Gefahr einer unbeabsichtigten Fehljustage einzelner Prismenoptiken ist entgegengewirkt.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Anhand der beigefügten Zeichnungen wird die Erfindung nachfolgend näher erläutert. Dabei zeigen:
- Fig. 1: ein erstes Ausführungsbeispiel eines erfindungsgemäßen Unterflurfeuers,
- Fig. 2: ein zweites Ausführungsbeispiel des erfindungsgemäßen Unterflurfeuers,
- Fig. 3: ein drittes Ausführungsbeispiel des erfindungsgemäßen Unterflurfeuers,
- Fig. 4: einen Querschnitt durch das Unterflurfeuer nach Fig. 3,
- Fig. 5: eine perspektivische Ansicht einer in dem Unterflurfeuer vorgesehenen Prismenoptik,
- Fig. 6: die Darstellung einer Montagesituation für die Prismenoptik nach Fig. 5,
- Fig. 7: einen Querschnitt durch ein Gehäuse des Unterflurfeuers mit der montierten und fixierten Prismenoptik,
- Fig. 8: eine perspektivische Ansicht eines Leuchtmoduls des Unterflurfeuers und eines zur Fixierung des Leuchtmoduls vorgesehenen Haltebügels,
- Fig. 9: eine Darstellung der Montagesituation für das Leuchtmodul nach Fig. 8,
- Fig. 10: einen Schnitt durch das Unterflurfeuer mit montierten Leuchtmodul und
- Fig. 11: eine perspektivische Unterseitenansicht auf das montierte Leuchtmodul und den Haltebügel.

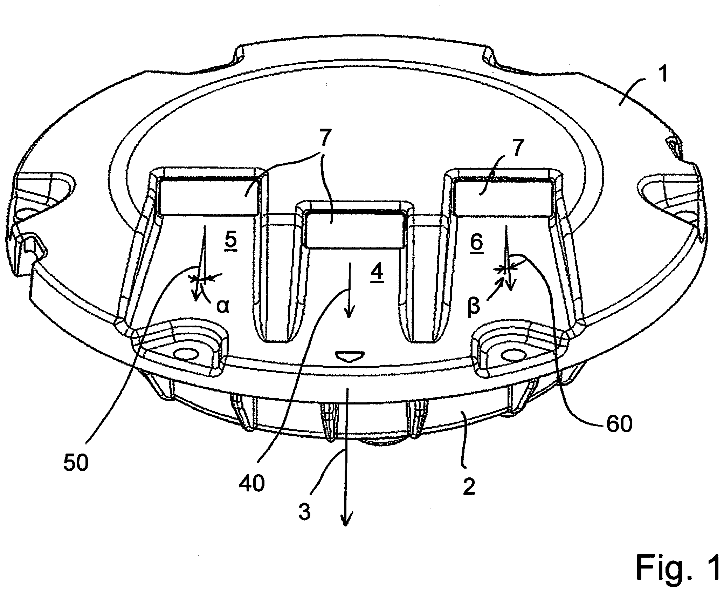

Die Fig. 1 bis 3 zeigen drei Varianten eines erfindungsgemäßen Unterflurfeuers. Jeweils sieht das Unterflurfeuer ein mehrteiliges Gehäuse mit einem Gehäuseoberteil 1 und einem Gehäuseunterteil 2 und drei in einer Hauptabstrahlrichtung 3 orientierte Lichtaustrittskanäle 4, 5, 6 vor. Die Lichtaustrittskanäle 4, 5, 6 sind an dem Gehäuseoberteil 1 vorgesehen. Das erfindungsgemäße Unterflurfeuer wird beispielsweise zur Markierung von Verkehrsflächen am Flughafen, insbesondere zur Markierung einer Start- und Landebahn verwendet. Insbesondere das Gehäuseunterteil 2 ist hierbei unterirdisch verbaut. Üblicherweise ist allein der Gehäuseoberteil 1 oberirdisch vorgesehen. Er ist typischerweise so stabil ausgeführt, dass er beschädigungsfrei von Flugzeugen oder Fahrzeugen überfahren werden kann. Gleichwohl besteht die Gefahr, dass das Unterflurfeuer beispielsweise beim Schneeräumen beschädigt wird. Insofern sind eine robuste Ausführung insbesondere mit einem Druckgussgehäuse und eine flache, kompakte Bauform von besonderer Bedeutung. Darüber hinaus muss zur Gewährleistung der Sicherheit am Flughafen das Unterflurfeuer im Falle einer Beschädigung zügig instand gesetzt und regelmäßig gewartet werden.

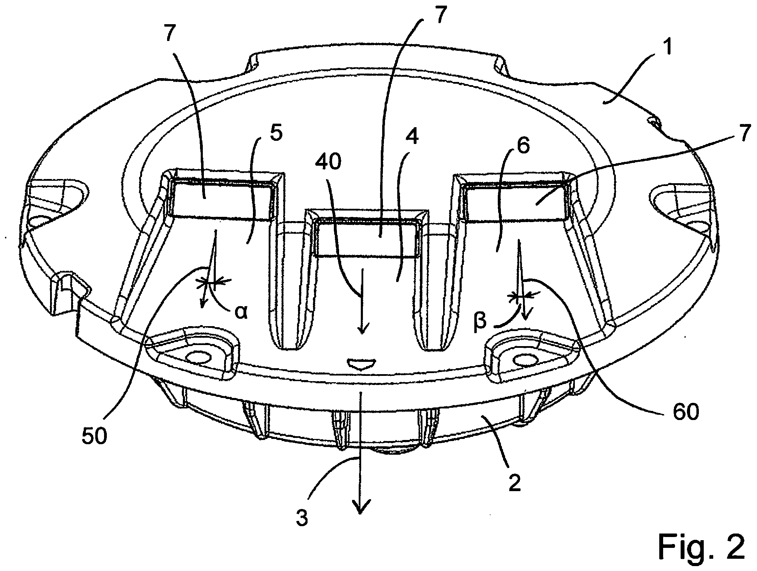

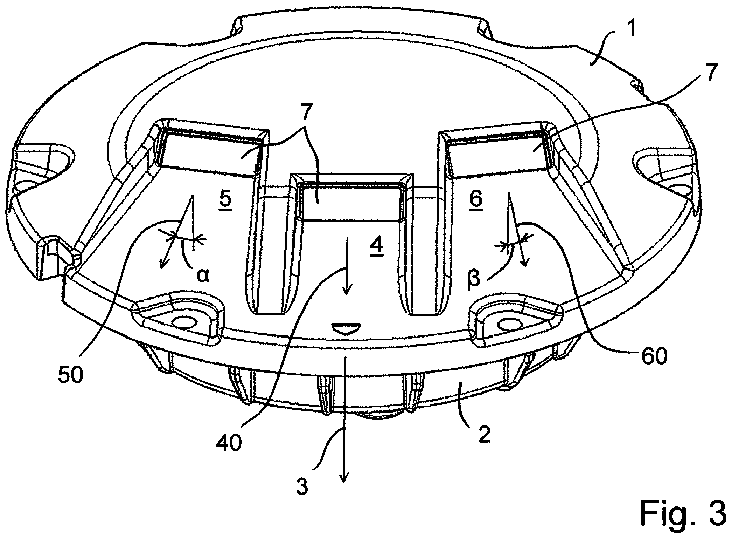

Abhängig vom jeweiligen Verwendungszweck ist die Lichtaustrittcharakteristik des Unterflurfeuers individuell gewählt. Fig. 1 zeigt ein erstes Ausführungsbeispiel des Unterflurfeuers, bei dem eine Kanallängsrichtung 40 eines mittleren Lichtaustrittskanals 4 exakt in die Hauptabstrahlrichtung 3 orientiert vorgesehen ist. Ein benachbarter linker Lichtaustrittskanal 5 ist bevorzugt auf eine Kanallängsrichtung 50 desselben um einen Winkel α von zirka 10° geneigt zur Hauptabstrahlrichtung 3 vorgesehen. Eine Kanallängsrichtung 60 eines benachbarten rechten Lichtaustrittskanal 6 ist bezogen auf die Hauptabstrahlrichtung 3 um einen Winkel β von zirka 5° geneigt vorgesehen. Insgesamt ergibt sich hierbei ein in der horizontalen Ebene kleiner Öffnungswinkel für das austretende Licht. Demgegenüber zeigen die Fig. 2 und 3 Ausführungsformen des erfindungsgemäßen Unterflurfeuers, bei dem die Neigung des linken Lichtaustrittskanals 5 und des rechten Lichtaustrittskanals 6 gegen die Hauptabstrahlrichtung 3 größer ausgewählt ist. Typischerweise liegen die Winkel α, β im Bereich von +/- 30° bezogen zur Hauptabstrahlrichtung 3, bevorzugt +/- 20° und besonders bevorzugt +/-15°. Jeweils kann die Charakteristik der Lichtabstrahlung dabei durch die Orientierung der Lichtaustrittskanäle 4, 5, 6 und zudem über die Anzahl der Lichtaustrittskanäle 4, 5, 6 eingestellt und variiert werden.

Um die vorgegebenen Lichtabstrahlcharakteristik individuell bereitstellen zu können und insbesondere eine kompakte Bauform für das Unterflurfeuer zu gewährleisten, ist bei der Realisierung von drei Lichtaustrittskanälen 4, 5, 6 oder mehr eine besonders kompakte Bauform vorteilhaft. Zudem ist ein modularer Aufbau von Vorteil, da hierdurch trotz der Variantenvielzahl Gleichteile in großer Zahl verwendet und die Kosten für das Unterflurfeuer gering gehalten werden können.

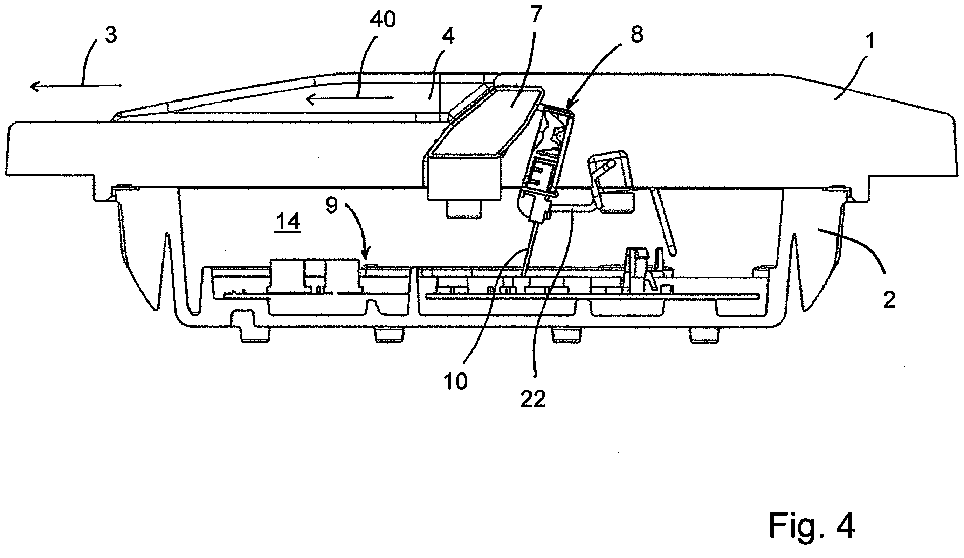

Die kompakte Bauform des erfindungsgemäßen Unterflurfeuers und der modulare Grundgedanke werden insbesondere in der Schnittdarstellung nach Fig. 4 deutlich. Gezeigt ist das gattungsgemäße Unterflurfeuer mit den wesentlichen Komponenten: dem Gehäuseoberteil 1, dem Gehäuseunterteil 2, einer in dem Gehäuseoberteil 1 vorgesehene Prismenoptik 7, einem Leuchtmodul 8, einer in dem Gehäuseunterteil 2 vorgesehenen Steuerung 9 und einem Leiter 10 zum Verbinden der Steuerung 9 mit dem Leuchtmodul 8. Von dem Leuchtmodul 8 emittiertes Licht durchscheint hierbei die in die Hauptabstrahlrichtung 3 beziehungsweise die Kanallängsrichtung 40 vorgelagert angeordnete Prismenoptik 7 und tritt über den Lichtaustrittskanal 4 aus. Die Prismenoptik 7 sowie das Leuchtmodul 8 sind nach dem gezeigten Ausführungsbeispiel der Erfindung dem Gehäuseoberteil 1 zugeordnet und an diesem festgelegt.

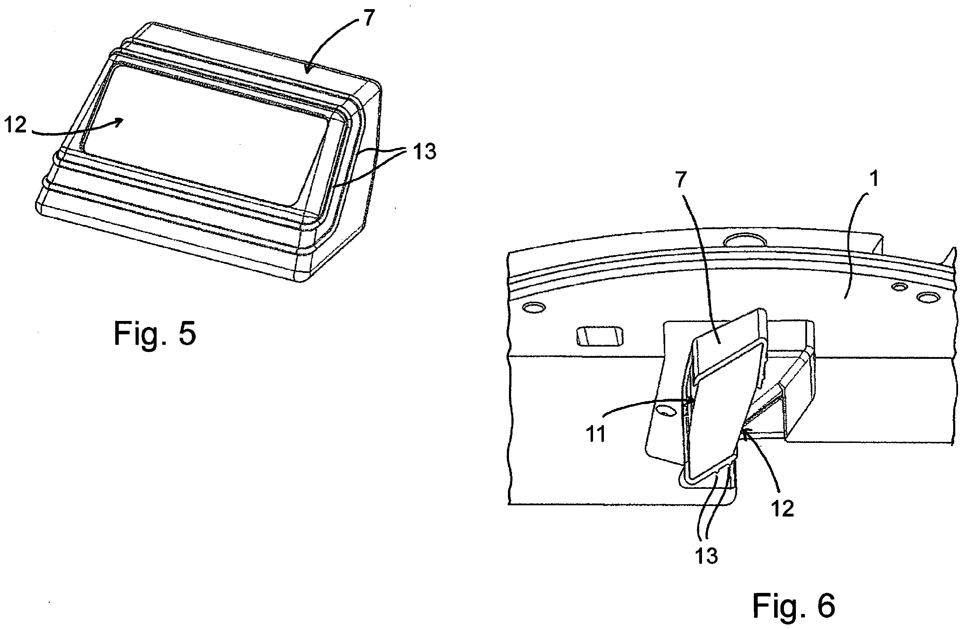

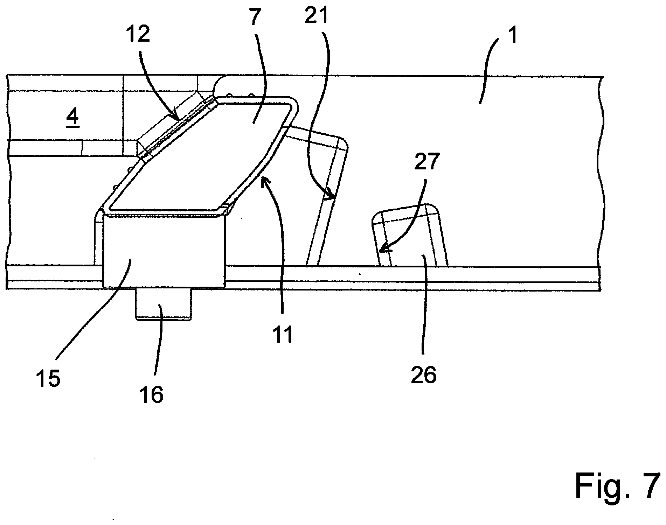

Die Fig. 5 bis 7 zeigen die Prismenoptik 7 sowie die Montage derselben in dem Gehäuseoberteil 1. Die Prismenoptik 7 weist eine Lichteintrittsfläche für das von dem Leuchtmodul 8 emittierte Licht sowie eine Lichtaustrittsfläche 12 auf. Die Lichteintrittsfläche 11 ist dem Leuchtmodul 8 zugewandt. Die Lichtaustrittsfläche 12 ist dem Lichtaustrittskanal 4 zugewandt. Die Lichtaustrittsfläche 12 ist von einer zweistufigen, umlaufenden Dichtung 13 umgeben, welche einem Eintritt von Feuchtigkeit in einen zwischen dem Gehäuseoberteil 1 und dem Gehäuseunterteil 2 gebildeten Gehäuseinnenraum 14 vorbeugt. Die Montage der Prismenoptik 7 erfolgt dabei so, dass die Dichtung 13 umlaufend an das Gehäuseoberteil 1 angelegt ist. Zur Fixierung der Prismenoptik 7 in dem Gehäuseoberteil 1 ist als Fixiermittel eine Andrückplatte 15 vorgesehen, welche über zwei Schrauben 16, 17 an dem Gehäuseoberteil 1 festgelegt ist. Es ist dabei so, dass für jede der insgesamt drei Prismenoptiken 7 ein eigenes Fixiermittel beziehungsweise eine eigene Andrückplatte 15 vorgesehen ist. Insofern ist es möglich, jede einzelne Prismenoptik 7 einzeln zu montieren beziehungsweise zu demontieren.

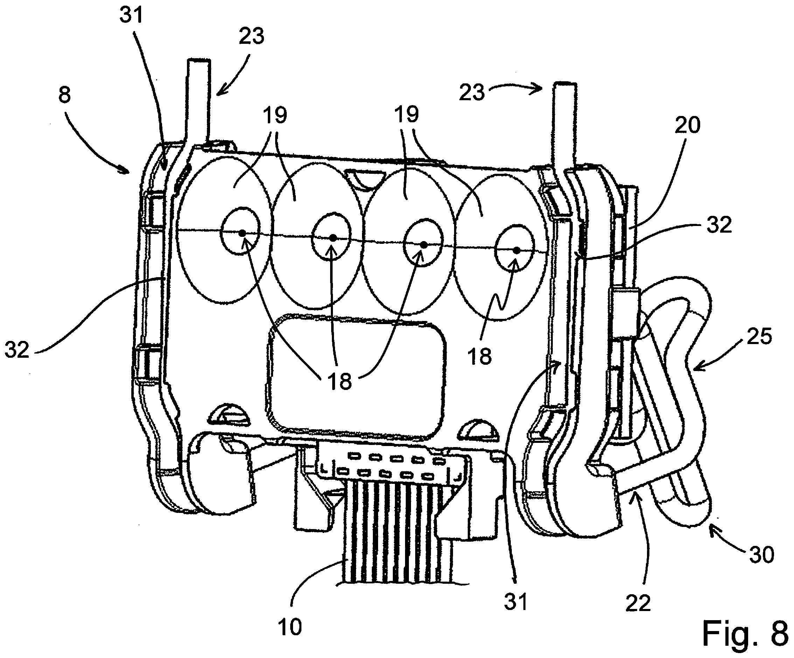

Das Leuchtmodul 8 mit dem Leiter 10 ist im Detail in Fig. 8 dargestellt. Es ist vorgesehen, dass nach dem gezeigten Ausführungsbeispiel das Leuchtmodul 8 vier in einer Reihenanordnung vorgesehene Leuchtdioden 18 als Lichtquelle mit jeweils einer der Leuchtdiode 18 zugeordneten Primäroptik 19 zum Formen des emittierten Lichts aufweist. Die Leuchtdioden 18 sind an einem gemeinsamen Lichtquellenträger 20 vorgesehen. Insgesamt ist für jeden Lichtaustrittskanal 4, 5, 6 des erfindungsgemäßen Unterflurfeuers ein eigenes Leuchtmodul 8 mit einem eigenen Lichtquellenträger 20 verwendet. Das Leuchtmodul 8 wird mit dem Lichtquellenträger 20 an eine Stützfläche 21 flächig angelegt, welche an dem Gehäuseoberteil 1 der Lichteintrittsfläche 11 der Prismenoptik 7 gegenüberliegend vorgesehen ist. Zum Festlegen des Leuchtmoduls 8 an dem Gehäuseoberteil 1 ist ein Haltebügel 22 als Fixiereinheit vorgesehen. Der Haltebügel 22 ist aus einem gebogenen Profilkörper gebildet, welcher aufgrund seiner schlanken Struktur elastisch verformbar ist.

An dem Leuchtmodul 8 sind seitlich gegenüberliegend zwei nutförmige Aufnahmen 32 vorgesehen. Der Haltebügel 22 sieht einen kompakt gestalteten Anlageabschnitt 32 vor, welcher in die Aufnahmenuten 31 eingesetzt wird zum Festlegen des Leuchtmoduls an dem Haltebügel 22.

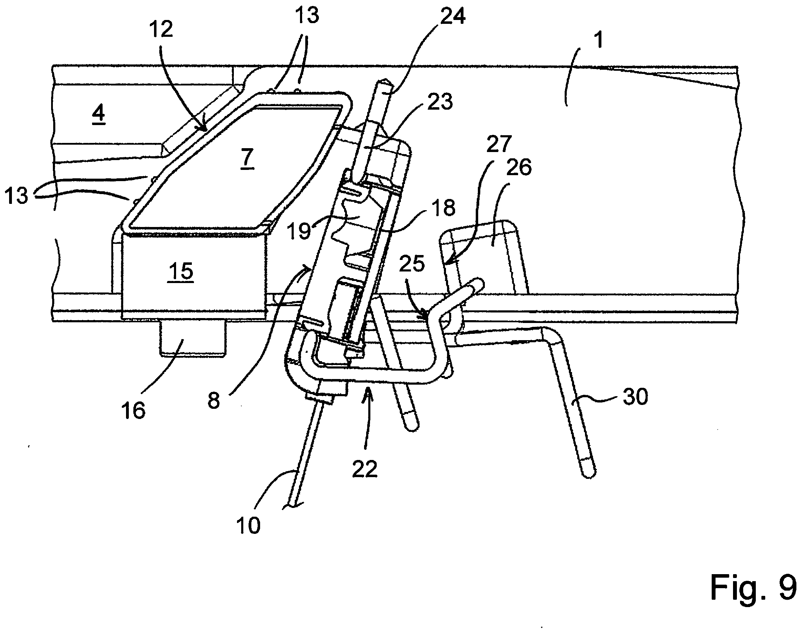

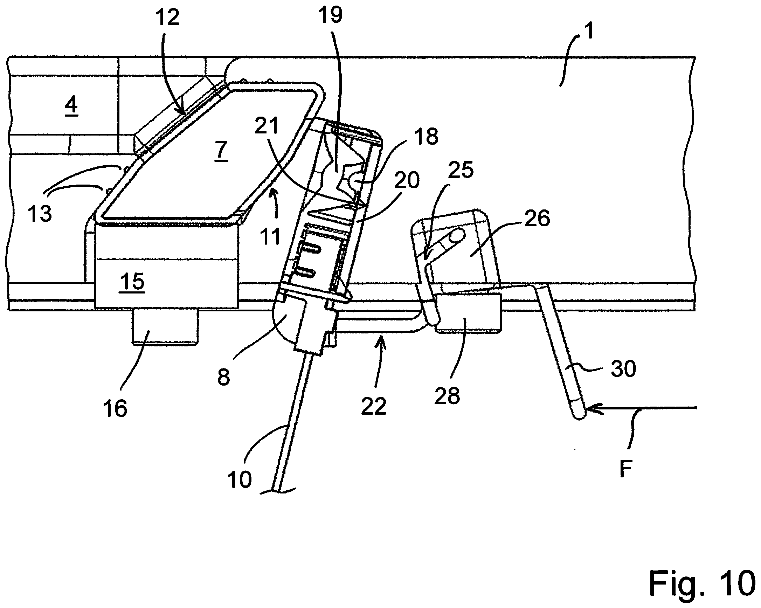

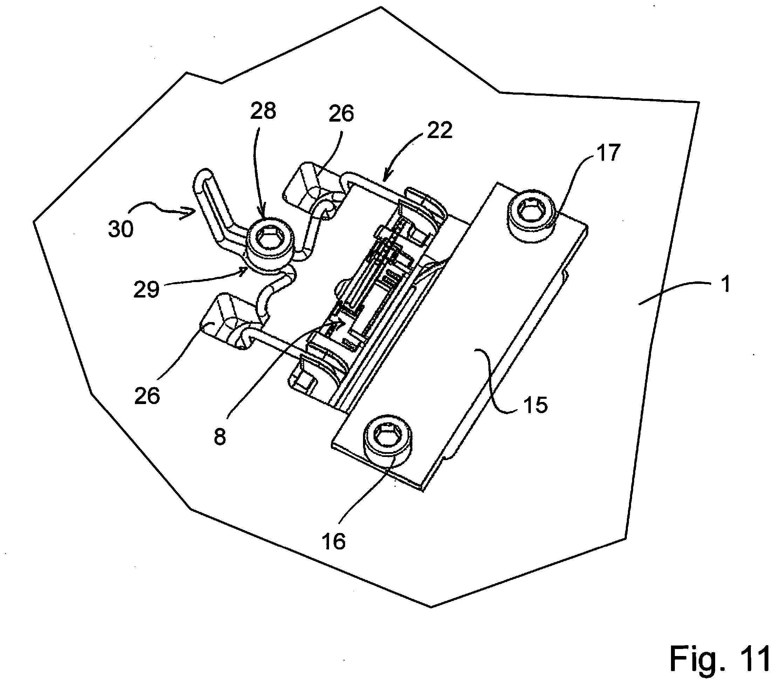

Fig. 9 zeigt die Montage des Leuchtmoduls 8. Die Fig. 10 und 11 zeigen das in dem Gehäuseoberteil 1 montierte Leuchtmodul 8.

Der Haltebügel 22 sieht zum einen zwei freie Enden 23 auf, welche auf gegenüberliegenden Querseiten des Leuchtmoduls 8 vorgesehen sind. Mit den freien Enden 23 voran wird der das Leuchtmodul 8 umgreifende Haltebügel 22 in korrespondierend gestaltete und beabstandete Aufnahmeausnehmungen 24 eingesetzt, welche an dem Gehäuseoberteil 1 vorgesehen sind. Zum Fixieren des Leuchtmoduls 8 wird der abschnittsweise abgewinkelt ausgebildete Haltebügel 22 elastisch verformt und geweitet. Infolge der elastischen Verformung kann ein abgeknöpft ausgebildeter Halteabschnitt 25 des Haltebügels 22 in eine an dem Gehäuseoberteil 1 gebildete und korrespondierend gestaltete Einsetzausnehmung 26 eingesetzt werden. Die Form des Haltebügels 22 im Bereich des Halteabschnitts 25 und eine Geometrie einer an der Einsetzausnehmung 26 gebildeten Anlagefläche 27 sind dabei so gewählt, dass der Halteabschnitt 25 die Anlagefläche 27 umgreift und ein Hinterschnitt gebildet ist. In einer montierten Stellung des Haltebügels 22 nach Fig. 10 ist das Leuchtmodul 8 insofern aufgrund des Hinterschnitts an dem Gehäuseoberteil 1 festgelegt. Als zusätzliche formschlüssige Sicherung ist eine Schraube 28 als Sicherungsmittel vorgesehen. Die Schraube 28 ist mit einem Schraubenschaft in einer an dem Gehäuseoberteil 1 vorgesehene, nicht dargestellte Sicherungsbohrung eingesetzt. Zugleich ist der Schraubenschaft durch eine an dem Haltebügel 22 gebildete Sicherungsausformung 29 geführt. Ein Schraubenkopf drückt den Haltebügel 22 dann im Bereich der Sicherungsausformung 29 gegen das Gehäuseoberteil 1. Alternativ kann vorgesehen sein, dass der Schraubenkopf den Haltebügel 22 mittelbar festlegt. Es kann dann zwischen dem Schraubenkopf und dem Haltebügel 22 beispielsweise ein Andrückkörper, insbesondere eine Unterlegscheibe, vorgesehen sein. Die Demontage des Haltebügels 22 setzt das Lösen der Schraube 28 als Sicherungsmittel voraus.

Vereinfacht wird die elastische Verformung des Haltebügels insbesondere durch das Vorsehen eines beabstandet zu dem Halteabschnitt 25 angeordneten Betätigungshebelabschnitts 30 des Haltebügels 22. Der Betätigungshebelabschnitt 30 ragt in der Montagestellung nach Fig. 10 von dem Gehäuseoberteil 1 ab. Wird er in der gezeigten Ansicht im Uhrzeigersinn mit einer Betätigungskraft F beaufschlagt, verformt sich der Haltebügel 22 elastisch und der Halteabschnitt 25 wird von der Anlagefläche 27 der Einsetzausnehmung 26 entfernt. Es ist dann möglich, den Haltebügel 22 mit dem daran festgelegten Leuchtmodul 8 in dem zur Lösung des Hinterschnitts erforderlichen Maße zu kippen und zur weiteren Demontage die freien Ende 23 des Haltebügels 22 aus Aufnahmeausnehmungen 24 zu entnehmen, welche an dem Gehäuseoberteil 1 gebildet sind.

Gleiche Bauteile und Bauteilfunktionen sind durch gleiche Bezugszeichen gekennzeichnet.

### Bezugszeichenliste

- 1: Gehäuseoberteil
- 2: Gehäuseunterteil
- 3: Hauptabstrahlrichtung
- 4: Lichtaustrittskanal
- 5: Lichtaustrittskanal
- 6: Lichtaustrittskanal
- 7: Prismenoptik
- 8: Leuchtmodul
- 9: Steuerung
- 10: Leiter
- 11: Lichteintrittsfläche
- 12: Lichtaustrittfläche
- 13: Dichtung
- 14: Gehäuseinnenraum
- 15: Andruckplatte
- 16: Schraube
- 17: Schraube
- 18: Leuchtdiode
- 19: Primäroptik
- 20: Lichtquellenträger
- 21: Stützfläche
- 22: Haltebügel
- 23: freies Ende
- 24: Aufnahmeausnehmung
- 25: Halteabschnitt
- 26: Einsetzausnehmung
- 27: Anlagefläche
- 28: Schraube
- 29: Sicherungsausformung
- 30: Betätigungshebelabschnitt
- 31: nutförmige Aufnahmen
- 32: Anlageabschnitt
- 40: Kanallängsrichtung
- 50: Kanallängsrichtung
- 60: Kanallängsrichtung
- α: Winkel
- β: Winkel
- F: Betätigungskraft

## Patentansprüche

1. Unterflurfeuer mit wenigstens zwei in einer gemeinsame Hauptabstrahlrichtung (3) orientiert angeordneten Lichtaustrittskanälen (4, 5, 6), mit einer Mehrzahl von den Lichtaustrittskanälen (4, 5, 6) zugeordneten Leuchtmodulen (8) umfassend wenigstens eine Lichtquelle (18) und eine der Lichtquelle (18) zugeordnete Primäroptik (19) zum Formen des Lichts, wobei von dem Leuchtmodul (8) emittiertes Licht über die zugeordneten Lichtaustrittskanäle (4, 5,6) abgestrahlt wird, mit einer Prismenoptik (7) je Lichtaustrittskanal (4, 5, 6), welche von dem Licht des Leuchtmoduls (8) durchschienen wird, und mit einem Gehäuse, welches bevorzugt mehrteilig realisiert ist und ausgebildet ist zur Aufnahme des Leuchtmoduls (8) und der Prismenoptik (7), und wobei für jedes Leuchtmodul (8) ein separater Lichtquellenträger (20) vorgesehen ist, wobei der Lichtquellenträger (20) als Teil des Leuchtmoduls (8) ausgeführt ist,
**dadurch gekennzeichnet, dass**
der Lichtquellenträger (20) flächig ausgebildet und flächig an einer Stützfläche (21) des Gehäuses angelegt ist und dass die Stützfläche (21) des Gehäuses und/oder der Lichtquellenträger (20) senkrecht erstreckt orientiert sind bezogen auf eine Kanallängsrichtung (40, 50, 60) des zugeordneten Lichtaustrittskanals (4, 5, 6).

2. Unterflurfeuer nach Anspruch 1, **dadurch gekennzeichnet, dass** die Kanallängsrichtung (40, 50, 60) in die Hauptabstrahlrichtung (3) orientiert ist und/oder dass zwischen der Kanallängsrichtung (40, 50, 60) und der Hauptabstrahlrichtung (3) ein Winkel (a, β) von maximal +/- 30° und bevorzugt +/-20° und besonders bevorzugt +/-15° gebildet ist.

3. Unterflurfeuer nach Anspruch 1 oder 2, **dadurch gekennzeichnet, dass** als Lichtquelle (18) eine Leuchtdiode vorgesehen ist und/oder dass eine optische Hauptachse der Leuchtdiode (18) in die Kanallängsrichtung (40, 50, 60) des zugeordneten Lichtaustrittskanals (4, 5, 6) orientiert angeordnet ist.

4. Unterflurfeuer nach einem der Ansprüche 1 bis 3, **dadurch gekennzeichnet, dass** alle Lichtaustrittskanäle (4, 5, 6) an einem gemeinsamen Gehäuseteil und bevorzugt an einem Gehäuseoberteil (1) vorgesehen sind.

5. Unterflurfeuer nach einem der Ansprüche 1 bis 4, **dadurch gekennzeichnet, dass** die Prismenoptik (7) in eine korrespondierend gestaltete Gehäuseausnehmung eingesetzt ist, welche bevorzugt an dem Gehäuseoberteil (1) gebildet ist.

6. Unterflurfeuer nach einem der Ansprüche 1 bis 5, **dadurch gekennzeichnet, dass** ein Fixiermodul vorgesehen ist zum Festlegen der Prismenoptik (7) an dem Gehäuse, wobei bevorzugt das Fixiermodul eine Andruckplatte (15) aufweist und wobei bevorzugt ein Fixiermodul je Prismenoptik (7) vorgesehen ist.

7. Unterflurfeuer nach einem der Ansprüche 1 bis 6, **dadurch gekennzeichnet, dass** zum Festlegen des Leuchtmodul (8) an dem Gehäuse eine Fixiereinheit vorgesehen ist und/oder dass die Fixiereinheit bevorzugt nach Art eines Haltebügels (22) ausgebildet ist, welcher das Leuchtmodul (8) umgreift.

8. Unterflurfeuer nach einem der Ansprüche 1 bis 7, **dadurch gekennzeichnet, dass** je Leuchtmodul (8) eine Fixiereinheit vorgesehen ist.

## Claims

1. Inset light with at least two light emission channels (4, 5, 6) being oriented in a common main radiation direction (3), with a plurality of illumination modules (8) associated with the light emission channels (4, 5, 6), comprising at least one light source (18) and a primary optics (19) being associated with the light source (18) for adjusting the light distribution wherein light emitted by the illumination module (8) is emitted via the associated light emission channels (4, 5, 6), with one prism optics (7) per each light emission channel (4, 5, 6), which is penetrated by the light of the illumination module (8), and with a housing, which is preferably realized in several parts and is adapted to receive the illumination module (8) and the prism optics (7), and wherein for each illumination module (8) a separate light source carrier (20) is provided, wherein the light source carrier (20) is designed as part of the illumination module (8),
**characterized in that**
the light source carrier (20) is formed planar and abuts at a support surface (21) of the housing in a planar manner and that the support surface (21) of the housing and/or the light source carrier (20) are/is oriented perpendicularly elongated related to a channel longitudinal direction (40, 50, 60) of the associated light emitting channel (4, 5, 6).

2. Inset light according to claim 1,
**characterized in that**
the channel longitudinal direction (40, 50, 60) is oriented in the main radiation direction (3) and/or that between the channel longitudinal direction (40, 50, 60) and the main radiation direction (3) an angle (α, β) of not more than +/- 30° and preferably +/- 20° and more preferably +/-15° is formed.

3. Inset light according to claim 1 or 2,
**characterized in that**
a light-emitting diode is provided as light source (18) and/or that an optical main axis of the light-emitting diode (18) is arranged oriented in the channel longitudinal direction (40, 50, 60) of the associated light emission channel (4, 5, 6).

4. Inset light according to one of claims 1 to 3,
**characterized in that**
all light emission channels (4, 5, 6) are provided on a common housing part and preferably on a housing top part (1).

5. Inset light according to one of claims 1 to 4,
**characterized in that**
the prism optics (7) is inserted into a correspondingly designed housing recess, which is preferably formed on the housing top part (1).

6. Inset light according to one of claims 1 to 5,
**characterized in that**
a fixing module is provided for attaching the prism optics (7) on the housing, wherein the fixing module preferably has a pressure plate (15) and wherein preferably one fixing module is provided per each prism optics (7).

7. Inset light according to one of claims 1 to 6,
**characterized in that**
for fixing the illumination module (8) at the housing, a fixing unit is provided and/or that the fixing unit is formed preferably in the manner of a holding bracket (22) which engages around the illumination module (8).

8. Inset light according to claim 1 to 9,
**characterized in that**
a fixing unit is provided per each illumination module (8).

## Revendications

1. Feu encastré avec au moins deux canaux de sortie de la lumière (4, 5, 6) orientés dans une direction de rayonnement principale commune (3), avec un nombre de modules de lampe (8) associés aux canaux de sortie de la lumière (4, 5, 6) et comprenant au moins une source lumineuse (18) et une optique primaire (19) associée à la source lumineuse (18) pour mettre en forme la lumière, dans lequel la lumière émise par le module de lampe (8) est projetée en passant par les canaux de sortie de la lumière (4, 5, 6) correspondants, avec pour chaque canal de sortie de la lumière (4, 5, 6) une optique à prisme (7) à travers laquelle passe la lumière du module de lampe (8), et avec un boîtier qui est de préférence réalisé en plusieurs parties et qui est conçu pour recevoir le module de lampe (8) et l'optique à prisme (7), et dans lequel est prévu pour chaque module de lampe (8) un support de source lumineuse (20) séparé, le support de source lumineuse (20) étant réalisé comme une partie du module de lampe (8),
**caractérisé en ce que** le support de source lumineuse (20) est plan et repose à plat sur une surface d'appui (21) du boîtier et **en ce que** la surface d'appui (21) du boîtier et/ou le support de source lumineuse (20) sont orientés perpendiculairement à un sens longitudinal de canal (40, 50, 60) du canal de sortie de la lumière (4, 5, 6) correspondant.

2. Feu encastré selon la revendication 1, **caractérisé en ce que** le sens longitudinal de canal (40, 50, 60) est orienté dans la direction de rayonnement principale (3) et/ou **en ce qu'**un angle (α, β) de +/-30° au maximum et de préférence de +/-20° et en particulier de +/-15° est formé entre le sens longitudinal de canal (40, 50, 60) et la direction de rayonnement principale (3).

3. Feu encastré selon la revendication 1 ou 2, **caractérisé en ce que** la source lumineuse (18) prévue est une diode électroluminescente et/ou **en ce qu'**un axe optique principal de la diode électroluminescente (18) est orienté dans le sens longitudinal de canal (40, 50, 60) du canal de sortie de la lumière (4, 5, 6) correspondant.

4. Feu encastré selon l'une des revendications 1 à 3, **caractérisé en ce que** tous les canaux de sortie de la lumière (4, 5, 6) sont prévus sur une partie commune du boîtier et de préférence sur la partie supérieure du boîtier (1).

5. Feu encastré selon l'une des revendications 1 à 4, **caractérisé en ce que** l'optique à prisme (7) est insérée dans un creux du boîtier de forme correspondante, qui est formé de préférence sur la partie supérieure du boîtier (1).

6. Feu encastré selon l'une des revendications 1 à 5, **caractérisé en ce qu'**il est prévu un module de fixation pour fixer l'optique à prisme (7) sur le boîtier, le module de fixation présentant de préférence une plaque d'appui (15) et un module de fixation étant de préférence prévu pour chaque optique à prisme (7).

7. Feu encastré selon l'une des revendications 1 à 6, **caractérisé en ce qu'**une unité de fixation est prévue pour fixer le module de lampe (8) et/ou **en ce que** l'unité de fixation est de préférence conformée comme un étrier de maintien (22) qui entoure le module de lampe (8).

8. Feu encastré selon l'une des revendications 1 à 7, **caractérisé en ce qu'**une unité de fixation est prévue pour chaque module de lampe (8).
